# EUROPEAN PATENT APPLICATION

(11) **EP 4 663 918 A1**
(43) Date of publication of application: **17.12.2025**
(21) Application number: 25182818.2
(22) Date of filing: 13.06.2025
(51) Int. Cl.: F02C 7/14, F02C 7/16, F02K 5/00

(54) **FAN EXIT GUIDE VANE THERMAL MANAGEMENT SYSTEM FOR HYBRID ELECTRICS**

(30) Priority: 13.06.2024 US 202418742742
(71) Applicant: RTX Corporation, Farmington, CT 06032 (US)
(72) Inventor: CLARK, Thomas E., Wells, 04090 (US); YAZICI, Murat, Glastonbury, 06033 (US)
(74) Representative: Dehns

(57) **Abstract**

A system for cooling a working fluid of a thermal management system of a hybrid electric engine (302) includes at least one fan exit guide vane (106) located aft of a rotor fan (104) of the hybrid electric engine (302). The at least one fan exit guide vane (106) comprises a heat exchanger mechanism (130) therein configured to cool the working fluid. At least one inlet (204) connected to the heat exchanger mechanism (130) receives the working fluid heated by power electronics (138) of the hybrid electric engine (302). At least one outlet (206) connected to the heat exchanger mechanism (130) provides the working fluid to the power electronics (138). The working fluid passing through the heat exchanger mechanism (130) within the at least one fan exit guide vane (106) is cooled by air (208) from the rotor fan (104) passing over the at least one fan exit guide vane (106).

## Description

### TECHNICAL FIELD

This disclosure relates generally to thermal management systems for hybrid electric engines. More specifically, this disclosure relates to using fan exit guide vanes as part of the thermal management system for electronic components of a hybrid electric engine.

### BACKGROUND

The integration of hybrid electric air-cooled heat exchangers on commercial engines requires increased ducting for an external working fluid and exhaust of said fluid from either the fan airstream or an external airstream. In classical integrations, heat exchangers intake fan air into a block heat exchanger and exhaust the air into the fan airstream for thrust recovery. Such arrangements are implemented in a turbo fan architecture where the air-oil coolers are integrated into the nacelle inner flow surface and/or the nacelle upper bifurcation. Additionally, surface air coolers may be used, however such coolers incur significant weight and the nacelle drag losses in comparison to block (plate-fin) air oil coolers. In hybrid electric gas turbine applications, where multiple power feed cables are routed from the fan zone to the core compartment, heat exchangers in the lower bifurcation are not feasible due to excess cabling volume. A manner for implementing a heat exchanger for cooling hybrid electric electronics within existing hybrid electric engine structure would be greatly beneficial.

### SUMMARY

This disclosure relates to using fan exit guide vanes as a heat exchanger within a hybrid electric engine to cool power electronics cooling fluid.

In an aspect of the present invention, a system for cooling a working fluid of a thermal management system of a hybrid electric engine includes at least one fan exit guide vane located aft of a rotor fan of the hybrid electric engine. The at least one fan exit guide vane comprises a heat exchanger mechanism therein configured to cool the working fluid. At least one inlet connected to the heat exchanger mechanism receives the working fluid heated by power electronics of the hybrid electric engine. At least one outlet connected to the heat exchanger mechanism provides the working fluid to the power electronics. The working fluid passing through the heat exchanger mechanism within the at least one fan exit guide vane is cooled by air from the rotor fan passing over the at least one fan exit guide vane.

Any single one or any combination of the following features may be used with the first embodiment.

In an embodiment of the above, the heat exchanger mechanism may include a channel defined within an interior of the at least one fan exit guide vane, the channel having a first end connected to the at least one inlet and a second end connected to the at least one outlet.

In an embodiment according to any of the previous embodiments, the system may include: at least one first check valve associated with the at least one inlet to prevent backflow of the working fluid, and at least one second check valve associated with the at least one outlet to prevent backflow of the working fluid.

In an embodiment according to any of the previous embodiments, the thermal management system further may include a control module for controlling a flow of the working fluid into the heat exchanger mechanism within the at least fan exit guide vane and for controlling the flow of the working fluid out of the heat exchanger mechanism and to the power electronics.

In an embodiment according to any of the previous embodiments, the thermal management system further may include a pump for pumping the working fluid from the power electronics of the hybrid electric engine to the at least one inlet of the heat exchanger mechanism.

In an embodiment according to any of the previous embodiments, the thermal management system further may include a tank for storing the working fluid received from the at least one outlet and cooled by the heat exchanger mechanism.

In an embodiment according to any of the previous embodiments, the thermal management system and the power electronics of the hybrid electric engine are mounted on a surface of the hybrid electric engine on a same side of the hybrid electric engine as the at least one fan exit guide vane.

In an embodiment according to any of the previous embodiments, the at least one fan exit guide vane may include a plurality of fan exit guide vanes, each of the plurality of fan exit guide vanes located on a same bifurcation of the hybrid electric engine as the thermal management system.

In another aspect of the present invention, a hybrid electric engine includes a rotor fan for pulling air into the hybrid electric engine and power electronics for powering the hybrid electric engine. The engine also includes a thermal management system for cooling the power electronics of the hybrid electric engine, the thermal management system may include: at least one fan exit guide vane located aft of the rotor fan, where the at least one fan exit guide vane may include a channel configured to receive a working fluid through an inlet, where the working fluid is cooled by air from the rotor fan as it routes through the channel and before exiting the at least one fan exit guide vane through an outlet.

Any single one or any combination of the following features may be used with the second embodiment.

In an embodiment of the above, the hybrid electric engine may include: at least one first check valve associated with the at least one inlet to prevent backflow of the working fluid, and at least one second check valve associated with the at least one outlet to prevent backflow of the working fluid.

In an embodiment according to any of the previous embodiments, the thermal management system further may include a thermal management system control module for controlling the working fluid: from the power electronics to the channel of the at least one fan exit guide vane; and from the channel of the at least one fan exit vane to the power electronics.

In an embodiment according to any of the previous embodiments, the thermal management system further may include: a pump for pumping the working fluid from the power electronics of the hybrid electric engine to the inlet of the channel; and a tank for storing the working fluid received from the at least one fan exit guide vane via the outlet.

In an embodiment according to any of the previous embodiments, the thermal management system and the power electronics of the hybrid electric engine are mounted on a surface of the hybrid electric engine on a same side of the hybrid electric engine as the at least one fan exit guide vane.

In an embodiment according to any of the previous embodiments, the at least one fan exit guide vane may include a plurality of fan exit guide vanes, each of the plurality of fan exit guide vanes located on a same bifurcation of the hybrid electric engine as the thermal management system.

In another aspect of the present invention, there is provided a method for cooling working fluids of a thermal management system of a hybrid electric engine. The method also includes receiving the working fluid heated by power electronics of the hybrid electric engine through at least one inlet connected to a heat exchanger mechanism within at least one fan exit guide vane of the hybrid electric engine; passing the working fluid heated by power electronics of the hybrid electric engine through the heat exchanger mechanism within the at least one fan exit guide vane located aft of a rotor fan of the hybrid electric engine, cooling the working fluid passing through the heat exchanger mechanism within the at least one fan exit guide vane by air from the rotor fan passing over the at least one fan exit guide vane to provide a cooled working fluid, and providing the cooled working fluid to the power electronics via at least one outlet connected to the heat exchanger mechanism.

Any single one or any combination of the following features may be used with the third embodiment.

In an embodiment of the above, the step of passing further may include passing the hot fluid from the thermal management system of the hybrid electric engine through a channel defined within the at least one fan exit guide vane located aft of the rotor fan of the hybrid electric engine.

In an embodiment according to any of the previous embodiments, the method may include: preventing backflow of the working fluid from the at least one inlet using at least one first check valve associated with the at least one inlet, and preventing backflow of the cooled working fluid from the at least one outlet using at least one second check valve associated with the at least one outlet.

In an embodiment according to any of the previous embodiments, the method may include: controlling a flow of the working fluid into the heat exchanger mechanism within the fan exit guide vane using a control module, and controlling the flow of the cooled working fluid out of the heat exchanger mechanism and to the power electronics using the control module.

In an embodiment according to any of the previous embodiments, the step of receiving further may include pumping the working fluid from the power electronics of the hybrid electric engine to the at least one inlet of the heat exchanger mechanism using a pump.

In an embodiment according to any of the previous embodiments, the step of providing further may include storing the cooled working fluid received from the at least one outlet connected to the heat exchanger mechanism in a tank.

Other technical features may be readily apparent to one skilled in the art from the following figures, descriptions, and claims.

### BRIEF DESCRIPTION OF THE DRAWINGS

For a more complete understanding of this disclosure and its advantages, reference is now made to the following description taken in conjunction with the accompanying drawings, in which like reference numerals represent like parts:
Fig. 1 illustrates a system using a fan exit guide vane as a heat exchanger for cooling power electronics within a hybrid electric turbine engine;
Fig. 2 illustrates an embodiment of the heat exchanger within the fan exit guide vane;
Fig. 3 illustrates a block diagram of a system for cooling hybrid electric power electronics using a plurality of fan exit guide vanes;
Fig. 4 illustrates check valves utilized with respect to inlet and outlet lines for fan exit guide vanes acting as heat exchangers; and
Fig. 5 illustrates a cross section of the airfoil comprising the fan exit guide vane that acts as a heat exchanger.

### DETAILED DESCRIPTION

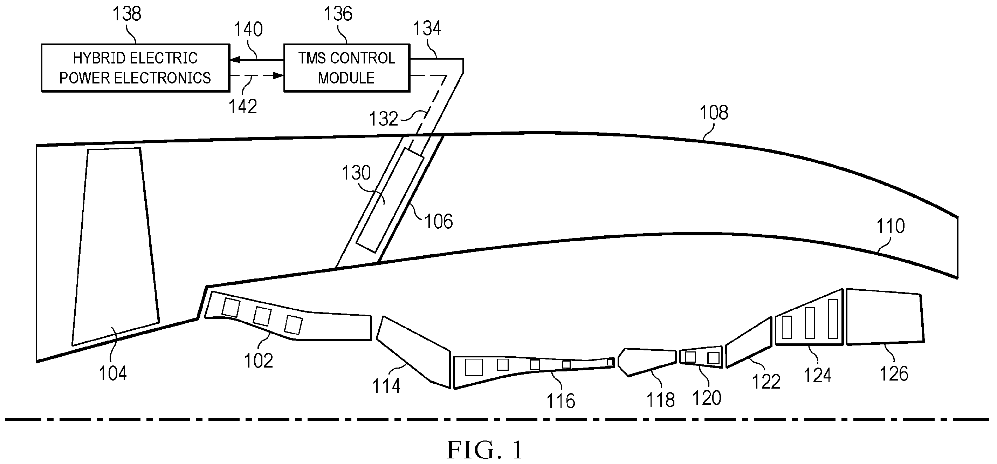

Figs. 1 through 5, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

Fig. 1 illustrates an existing system that utilizes a fan exit guide vane 106 as a heat exchanger of a thermal management system for a hybrid electric turbine engine. Cold air that is sucked into the nacelle 108 passes through the rotor fan 104 and past the fan exit guide vanes 106 between the outer surface of the nacelle 108 and a nacelle inner flow surface 110 as well as through a core of the gas turbine engine. The core, or core engine, consists of the low-pressure compressor 112, compressor frame 114, high-pressure compressor 116, combustion chamber 118, high-pressure turbine 120, turbine frame 122, low-pressure turbine 124 and exhaust frame 126. The cold air that flows by the fan exit guide vane 106 cools working fluid(s) of the thermal management system that are routed through a heat exchanger mechanism 130 implemented within the fan exit guide vane 106. The working fluid(s) have previously cooled the power electronics 138 of the hybrid electric engine.

The cold air passes over the fan exit guide vane 106 to cool the working fluid(s) flowing through the heat exchanger mechanism 130. The heat absorbed by the cool air passing over the heat exchanger mechanism 130 is exhausted out the back of the gas turbine engine (between the exterior surface of the nacelle 108 and the nacelle inner flow surface 110) as thrust. The heat exchanger mechanism 130 includes an input line 132 for receiving a heated working fluid from a thermal management system (TMS) control module 136 and an output line 134 for providing the cooled working fluid back to the TMS control module 136. TMS control module 136 is further connected to the hybrid electric power electronics 138 in order to cool the electronics. The working fluid is provided via line 140 to the hybrid electric power electronics 138 from the TMS control module 136. The working fluid that has removed heat from the power electronics 138 is provided back to the TMS control module 136 via line 142. The heated working fluid may then be routed to the heat exchanger mechanism 130 located within one or more of the fan exit guide vanes 106, for cooling. The working fluid cooled by the heat exchanger mechanism 130 may then be routed back to the TMS control module 136 to provide further cooling for the hybrid electric power electronics 138.

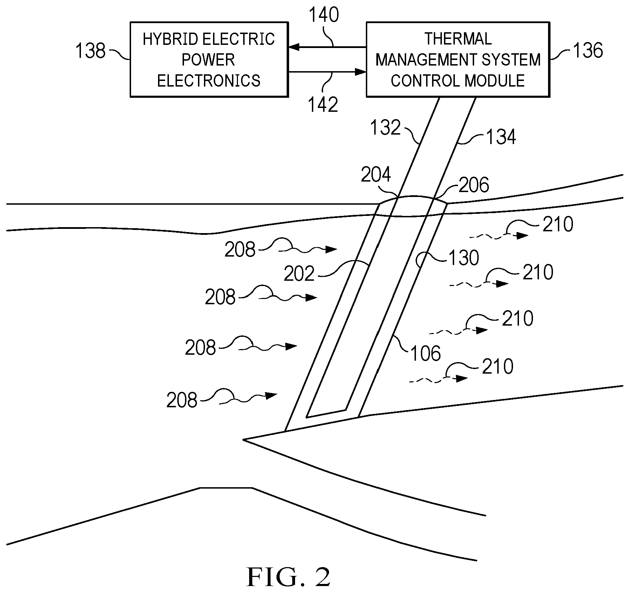

Referring now to Fig. 2, there is more particularly illustrated an embodiment of the heat exchanger mechanism 130 provided by a channel 202 defined within the fan exit guide vane 106. The fan exit guide vane 106 includes a channel 202 defined therein that enters the fan exit guide vane 106 at a input port 204, passes the length of the body of the fan exit guide vane 106 two times through a substantially U-shaped channel (other channel shapes may be used), and exits the fan exit guide vane through an output port 206. The channel 202 receives a heated working fluid from the TMS control module 136, and the working fluid is cooled as it passes through the channel 202 within the fan exit guide vane 106 by the ambient pressured fan air 208 provided from the rotor fan 104 (Fig. 1) at the intake of the hybrid electric engine. The fan air 208 cools the heated working fluid within the channel 202 such that a cooled working fluid is provided from the output port 206 of the channel 202 in the fan exit guide vane 106. The cooled working fluid output from the channel 202 has a lower temperature that the heated working fluid originally provided to the channel 202 via the input port 204. The air 210 that passes by the fan exit guide vane 106 is hotter than the fan air 208, heat exchanged air due to the fact of the air flowing over the fan exit guide vane 106 and removing the heat from the working fluid within the channel 202.

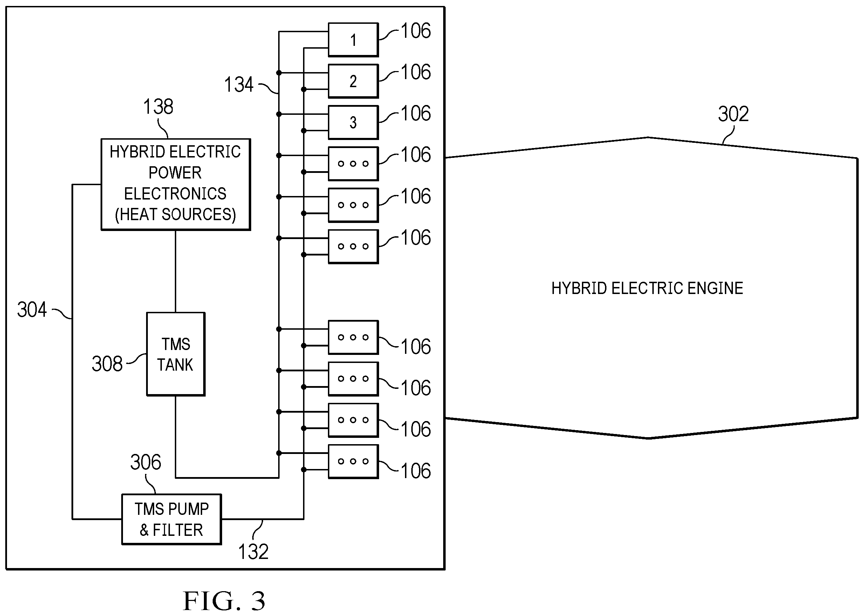

Referring now to Fig. 3, there is illustrated a schematic diagram of the use of fan exit guide vanes 106 as heat exchangers for cooling the hybrid electric power electronics 138 of a hybrid electric engine 302. The hybrid electric power electronics 138 include various motor controllers for high spool and/or low spool electrical machines that make up the electrical portion of the hybrid electric engine 302. Each of the individual fan exit guide vanes 106 includes the heat exchanger mechanism 130 coupled to an input line 132 and an output line 134 configured to route a working fluid through the heat exchanger mechanism 130 as described herein. The hybrid electric power electronics 138 include heat sources from which the working fluid absorbs heat and is routed to the fan exit guide vanes 106 through a line 304 by a TMS pump 306. The TMS pump 306 may include a filter configured to remove any particulate matter therefrom. After passing through the heat exchanger mechanism 130 within the fan exit guide vanes 106, the cooled working fluid in output line 134 is provided back to the thermal management system tank 308. The thermal management system tank 308 provides cooled working fluid to the hybrid electric power electronics 138 in order to remove heat from the power electronics. The TMS system described herein may include as many fan exit guide vanes 106 with an internal heat exchanger mechanism 130 as necessary. That is, not every fan exit guide vane 106 in an array of fan exit guide vanes may include the heat exchanger mechanism 130. For example, the fan exit guide vanes 106 on one half (e.g., upper half, bifurcation) of an array may include the heat exchanger mechanism 130. For another example, every other fan exit guide vane 106 in an array may include the heat exchanger mechanism 130. For yet another example, every third fan exit guide vane 106 in an array may include the heat exchanger mechanism 130. As an illustrative example, the hybrid electric engine 302 may include fifteen, eighteen, twenty, etc. fan exit guide vanes 106 configured with heat exchanger mechanisms 130.

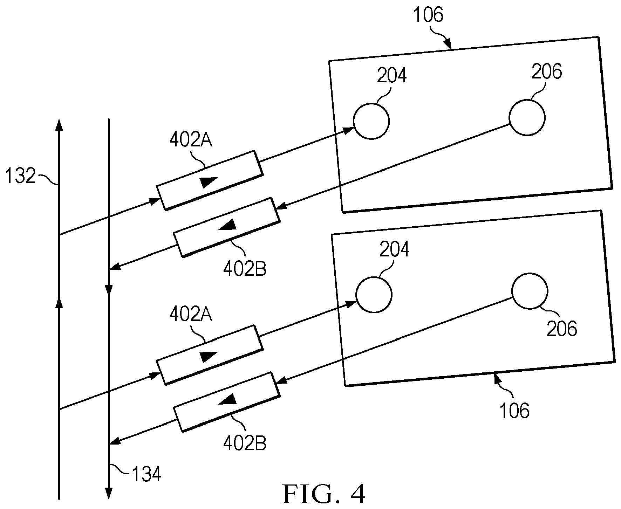

Referring now to Fig. 4, there are illustrated the use of check valves 402 (illustrated as valves 402A and 402B) associated with the input ports 204 and the output ports 206 of the fan exit guide vanes 106. Check valves 402B enable a cooled working fluid to flow out of the output ports 206 of the fan exit guide vanes 106 and prevent flow back into the outlet port 206. In a similar fashion, check valves 402A enable a heated working fluid to flow into the input port 204 of the fan exit guide vane 106 and prevent reverse flow.

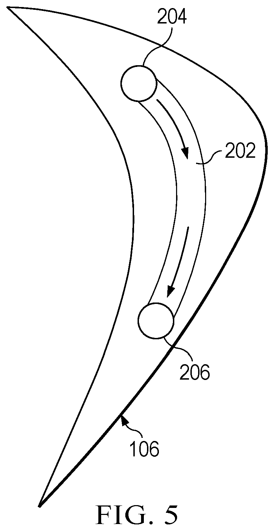

Referring now to Fig. 5 there is illustrated a cross-sectional view of a first embodiment of the channel 202 passing through fan exit guide vane 106. In this embodiment, only the channel 202 is included that receives hot fluid from the thermal management system control module 136 to pass through the fan exit guide vane 106. The hot fluid supply is provided at input ports 204 and the cooled fluid exits at output port 206. The hot fluid entering at input ports 204 is cooled as it passes the length of the channel 202 and provides a cooled fluid at output port 206. It will be appreciated that the shape and dimensions of the channel 202 and the fan exit guide vane 106 are merely by way of example and other shapes and configurations of the channel 202 and fan exit guide vane 106 may be utilized.

The above-described use of the fan exit guide vane 106 including internal channels to have the vane act as a heat exchanger for hybrid electronics provides a number of advantages to existing hybrid electric turbine engine designs. For example, use of the fan exit guide vanes 106 as heat exchangers may eliminate the need for an air oil cooler and associated scoop. The elimination of a heat exchanger scoop on the hybrid electric engine may provide benefits in a reduction of insertion loss and drag (e.g., between 0.1% to 0.3% FB (fuel burn) benefit). The elimination of the air oil heat exchanger may also result in weight savings. Additionally, improved heat distribution within the fan duct may realize a minor thrust recovery benefit from the heat exchange. Actively cooled fan exit guide vanes may be packaged with hybrid electric thermal management systems and preserve design space for cable routing through the lower bifurcation.

It may be advantageous to set forth definitions of certain words and phrases used throughout this patent document. The term "couple" and its derivatives refer to any direct or indirect communication between two or more components, whether or not those components are in physical contact with one another. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the following claims.

## Claims

1. A system for cooling a working fluid of a thermal management system of a hybrid electric engine (302), comprising:
at least one fan exit guide vane (106) located aft of a rotor fan (104) of the hybrid electric engine (302), wherein the at least one fan exit guide vane (106) comprises a heat exchanger mechanism (130) therein configured to cool the working fluid;
at least one inlet (204) connected to the heat exchanger mechanism (130) for receiving the working fluid heated by power electronics (138) of the hybrid electric engine (302); and
at least one outlet (206) connected to the heat exchanger mechanism (130) for providing the working fluid to the power electronics (138), wherein the working fluid passing through the heat exchanger mechanism (130) within the at least one fan exit guide vane (106) is cooled by air (208) from the rotor fan (104) passing over the at least one fan exit guide vane (106).

2. The system of claim 1, wherein the heat exchanger mechanism (130) comprises a channel (202) defined within an interior of the at least one fan exit guide vane (106), the channel (202) having a first end connected to the at least one inlet (204) and a second end connected to the at least one outlet (206).

3. The system of claim 1 or 2, further comprising:
at least one first check valve (402A) associated with the at least one inlet (204) to prevent backflow of the working fluid; and
at least one second check valve (402B) associated with the at least one outlet (206) to prevent backflow of the working fluid.

4. The system of any preceding claim, wherein the thermal management system further comprises a control module (136) for controlling a flow of the working fluid into the heat exchanger mechanism (130) within the at least fan exit guide vane (106) and for controlling the flow of the working fluid out of the heat exchanger mechanism (130) and to the power electronics (138).

5. The system of any preceding claim, wherein the thermal management system further comprises a pump (306) for pumping the working fluid from the power electronics (138) of the hybrid electric engine (302) to the at least one inlet (204) of the heat exchanger mechanism (130).

6. The system of any preceding claim, wherein the thermal management system further comprises a tank (308) for storing the working fluid received from the at least one outlet (206) and cooled by the heat exchanger mechanism (130).

7. The system of any preceding claim, wherein the thermal management system and the power electronics (138) of the hybrid electric engine (302) are mounted on a surface of the hybrid electric engine (302) on a same side of the hybrid electric engine (302) as the at least one fan exit guide vane (106).

8. The system of any preceding claim, wherein the at least one fan exit guide vane (106) comprises a plurality of fan exit guide vanes (106), each of the plurality of fan exit guide vanes (106) located on a same bifurcation of the hybrid electric engine (302) as the thermal management system.

9. A hybrid electric engine (302) comprising:
a rotor fan (104) for pulling air (208) into the hybrid electric engine (302);
power electronics (138) for powering the hybrid electric engine (302); and
a thermal management system for cooling the power electronics (138) of the hybrid electric engine (302), the thermal management system comprising at least one fan exit guide vane (106) located aft of the rotor fan (104), wherein the at least one fan exit guide vane (106) comprises a channel (202) configured to receive a working fluid through an inlet (204), wherein the working fluid is cooled by air (208) from the rotor fan (104) as it routes through the channel (202) and before exiting the at least one fan exit guide vane (106) through an outlet (206), optionally the hybrid electric engine (302) further comprising:
at least one first check valve (402A) associated with the at least one inlet (204) to prevent backflow of the working fluid; and
at least one second check valve (402B) associated with the at least one outlet (206) to prevent backflow of the working fluid.

10. The hybrid electric engine (302) of claim 9, wherein:
the thermal management system further comprises a thermal management system control module (136) for controlling the working fluid from the power electronics (138) to the channel (202) of the at least one fan exit guide vane (106) and from the channel (202) of the at least one fan exit vane (106) to the power electronics (138); and/or
the thermal management system further comprises a pump (306) for pumping the working fluid from the power electronics (138) of the hybrid electric engine (302) to the inlet (204) of the channel (202) and a tank (308) for storing the working fluid received from the at least one fan exit guide vane (106) via the outlet (206).

11. The hybrid electric engine (302) of claim 9 or 10, wherein:
the thermal management system and the power electronics (138) of the hybrid electric engine (302) are mounted on a surface of the hybrid electric engine (302) on a same side of the hybrid electric engine (302) as the at least one fan exit guide vane (106); and/or
the at least one fan exit guide vane (106) comprises a plurality of fan exit guide vanes (106), each of the plurality of fan exit guide vanes (106) located on a same bifurcation of the hybrid electric engine (302) as the thermal management system.

12. A method for cooling working fluids of a thermal management system of a hybrid electric engine (302), comprising:
receiving the working fluid heated by power electronics (138) of the hybrid electric engine (302) through at least one inlet (204) connected to a heat exchanger mechanism (130) within at least one fan exit guide vane (106) of the hybrid electric engine (302);
passing the working fluid heated by power electronics (138) of the hybrid electric engine (302) through the heat exchanger mechanism (130) within the at least one fan exit guide vane (106) located aft of a rotor fan (104) of the hybrid electric engine (302);
cooling the working fluid passing through the heat exchanger mechanism (130) within the at least one fan exit guide vane (106) by air (208) from the rotor fan (104) passing over the at least one fan exit guide vane (106) to provide a cooled working fluid; and
providing the cooled working fluid to the power electronics (138) via at least one outlet (206) connected to the heat exchanger mechanism (130).

13. The method of claim 12, wherein the step of passing further comprises passing the hot fluid from the thermal management system of the hybrid electric engine (302) through a channel (202) defined within the at least one fan exit guide vane (106) located aft of the rotor fan (104) of the hybrid electric engine (302).

14. The method of claim 12 or 13, further comprising:
preventing backflow of the working fluid from the at least one inlet (204) using at least one first check valve (402A) associated with the at least one inlet (204) and preventing backflow of the cooled working fluid from the at least one outlet (206) using at least one second check valve (402B) associated with the at least one outlet (206); and/or
controlling a flow of the working fluid into the heat exchanger mechanism (130) within the fan exit guide vane (106) using a control module (136) and controlling the flow of the cooled working fluid out of the heat exchanger mechanism (130) and to the power electronics (138) using the control module (136).

15. The method of any of claims 12 to 14, wherein:
the step of receiving further comprises pumping the working fluid from the power electronics (138) of the hybrid electric engine (302) to the at least one inlet (204) of the heat exchanger mechanism (130) using a pump (306); and/or
the step of providing further comprises storing the cooled working fluid received from the at least one outlet (206) connected to the heat exchanger mechanism (130) in a tank (308).
